# EUROPEAN PATENT APPLICATION

(11) **EP 4 029 413 A1**
(43) Date of publication of application: **20.07.2022**
(21) Application number: 21151958.2
(22) Date of filing: 16.01.2021
(51) Int. Cl.: A47G 19/14, B65D 25/14, B65D 3/06, B65D 81/38, A23F 5/00, A23L 2/38

(54) **SINGLE USE COFFEE CUP WITH SEED PAPER**

(71) Applicant: Christensen, Nilofer, 1052 JT Amsterdam (NL); Christensen, Aileen, 1052 LM Amsterdam (NL); Torre, José, 4700-217 Braga (PT)
(72) Inventor: Christensen, Nilofer, 1052 JT Amsterdam (NL); Christensen, Aileen, 1052 LM Amsterdam (NL); Torre, José, 4700-217 Braga (PT)

(57) **Abstract**

A recyclable, single-use paper coffee cup which takes the form of either single-walled or double-walled. The outer wall of the cup is made from paper infused with wildflower or food grade seeds which is detachable and can be planted inside the cup whereas the inside wall of the cup which comes into contact with the beverage is coated with a biopolymer.

## Description

### FIELD OF THE INVENTION

The present disclosure relates to the field of producing coffee cups used to retain coffee by using environmental-friendly material. As a substitute to plastic, these coffee cups shall consist of biopolymer and seed paper, which shall encourage consumers to carry the coffee cups to their homes after consuming the beverage and plant the seeds contained on the seed paper as opposed to disposing off the coffee cups. This shall ensure a reduction of landfill trash produced by the industry as well as plastic waste.

### BACKGROUND

There exists today a wide variety of coffee cups, including in particular the vast array of coffee cups which are made of plastic. The advent and growth of coffee cafes and the increasing popularity of "take-out' coffee has greatly increased the need for environmentally friendly coffee cups which have been frequently regarded as disposable cups and therefore disposed off after consumption of coffee. As a result of this, the eatery industry has become one of the most notorious lot that contribute to landfill trash and in particular, plastic waste disposers in the global environment.

For this reason, there arose a need to produce coffee cups that are plastic free so as to reduce plastic waste. There was also a need to introduce coffee cups made of material that would encourage recycling by consumers of the coffee planting the seeds contained on the seed paper instead of disposing off the coffee cups thereby resulting in reduced plastic waste.

### DESCRIPTION OF THE PRIOR ART

In the past, coffee cups have been particularly unimaginative and have contributed enormously to the degradation of the environment due to the material used in the production of the coffee cups.

The following is considered by the Applicant as the closest prior art:

EP0906036A1 discloses a cup for hot or cold drinks made of an edible twice-baked pastry. It consists of a disposable container for hot drinks made of a pastry which is twice baked and - as such - bears the feature of being edible once the liquid contained in it has been drunk. It is entirely made of a pastry similar to the one used for ice cream wafer; such pastry must undergo a baking process in casts in order to give it a consistency comparable to that of a thin biscuit.

US20170233166 discloses an invention relating to a double-walled cup made of a paper material, for example, paper or cardboard. In particular, a paper cup having an inner cup and an outer sleeve attached thereto is disclosed. The outer sleeve is configured to reduce the heat transfer from the inner cup to the outer sleeve. The invention further relates to a method of manufacturing the double-walled cup.

US5326019 discloses an invention relating to a paper cup having inner and outer walls made of paper. The inner and outer walls are spaced apart from one another by means of a spacer or insert located between the two layers. This spacer may be merely a paper member having a thickness of about 1/8-1/2" and wound in spiral fashion between the inner and outer wall. Between the layers a pocket of air is created and this acts as an insulator for cold and warm beverages.

US20130175267 discloses an invention to provide a paper cup comprising: a cup body comprising a surface, and a base. A plurality of uneven stiffeners are arranged on the surface of the cup body. The paper cup is anti-sliding, thermal insulated, and has an uneven surface.

Traditionally used coffee cups have a layer of plastic on the inside which makes them stronger and waterproof. This makes such coffee cups very difficult to recycle. As can be noted from above, the manufacturers of these coffee cups concentrated more on the insulation aspect of the cups so as to avoid the escape of heat and keep the beverage hot without considering the detrimental effect that such cups would have on the environment upon disposal. It was therefore necessary to come up with an invention that will produce environmentally friendly coffee cups that will encourage consumers not to dispose off the cups but to make good use of the cups by planting the seeds contained on the seed paper.

### SUMMARY OF THE INVENTION

The present disclosure relates to the field of producing coffee cups used to retain coffee by using environmental-friendly material and eliminates the use of plastic thereby reducing plastic waste from the industry.

Accordingly, an aspect of the present disclosure relates to a single-use paper coffee cup which can either be single-walled or double-walled. The single-walled cup consists of only one layer which is made from seed paper (paper infused with wildflower or food grade seeds). The inside wall which comes into contact with the beverage is coated with a biopolymer which increases its impermeability thereby making it strong and waterproof. The double-walled cup is made from seed paper, which is in the outside wall. The seed paper which is located on the outside of the wall is detachable from the outside wall and can be planted inside the cup. The inside wall is coated with a biopolymer. Both types of cups are compostable and plastic free.

Compared to traditional coffee cups, the present disclosure is preferable in that it does not generate any accumulation of solid or plastic waste. In addition - beyond all practical, environmental and economic concerns - it must be stressed that the coffee cup in question is further appreciated and relished by the user, who - having enjoyed the beverage contained in it - may then go on to plant the seeds contained in the seed paper in their homes rather than disposing off the cups. This encourages users not to dispose off the cups thereby reducing waste.

### DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure. The diagrams are for illustration only, which thus is not a limitation of the present disclosure, and wherein:

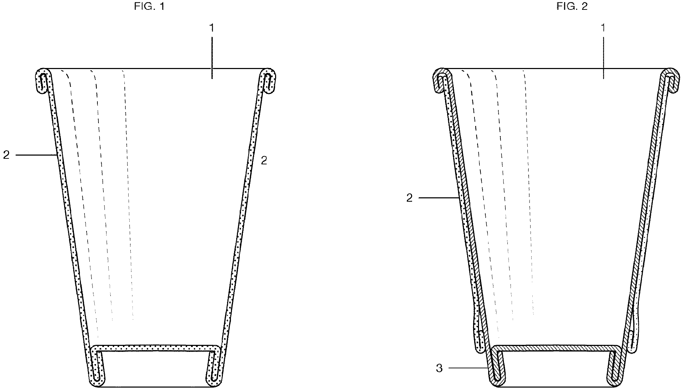

FIG. 1 is a block diagram schematically illustrating a cross-section view of the single-walled cup. **1** illustrates the biopolymer coating on the cup which is located on the inside part of the cup. **2** illustrates the seed paper which is located on the outside part of the cup.

FIG. 2 is a block diagram schematically illustrating a cross-section view of the double-walled cup. **1** illustrates the biopolymer coating on the cup which is located on the inside part of the cup. **2** illustrates the seed paper which is located on the outside part of the cup. **3** illustrates a plain packaging paper sourced from recycled materials.

## Claims

1. A method of producing a single-use coffee paper cup infused with wildflower or food grade seeds on the outer wall and coated with a biopolymer on the inside wall.

2. A single-use, single-walled paper coffee cup made from paper infused with wildflower or food grade seeds on the outer wall and coated with a biopolymer on the inside wall.

3. A single-use, double-walled paper coffee cup made from paper infused with wildflower or food grade seeds on the outer wall and coated with a biopolymer on the inside wall.
